# EUROPEAN PATENT SPECIFICATION

(11) **EP 3 305 636 B1**
(45) Date of publication and mention of the grant of the patent: **22.05.2019**
(21) Application number: 17185503.4
(22) Date of filing: 09.08.2017
(51) Int. Cl.: B62J 6/04

(54) **SADDLE-RIDE TYPE VEHICLE**
SATTELFAHRZEUG
VÉHICULE DE TYPE À SELLE

(30) Priority: 30.09.2016 JP 2016194616
(43) Date of publication of application: 11.04.2018
(73) Proprietor: HONDA MOTOR CO., LTD., Tokyo 107-8556 (JP)
(72) Inventor: HOJO, Masayuki, Saitama, 351-0193 (JP); MATAYOSHI, Takahiro, Saitama, 351-0193 (JP); TAKIZAWA, Takashi, Saitama, 351-0193 (JP)
(74) Representative: Weickmann & Weickmann PartmbB

(56) References cited:
- WO-A1-2016/092682

## Description

### [TECHNICAL FIELD]

The present invention relates to a saddle-ride type vehicle and particularly relates to an exterior component used for the saddle-ride type vehicle.

### [BACKGROUND ART]

As disclosed in Patent Document 1, a vehicle has a taillight unit that is a lighting device. As is apparent from the rear view, the taillight unit is disposed with a wide width in the vehicle width direction of the vehicle. WO 2016/092.682 discloses a vehicle according to the preamble of claim 1.

### [PRIOR ART DOCUMENT]

### [PATENT DOCUMENT]

[Patent Document 1] International Publication No. WO2015/045115

### [SUMMARY OF THE INVENTION]

### [PROBLEMS TO BE SOLVED BY THE INVENTION]

The rear view of the vehicle can be made favorable by adjusting the taillight unit to the vehicle width. However, this leads to provision of a dedicated taillight unit according to the shape of an exterior component of the vehicle. In addition, the size of the taillight unit increases due to this.

The present invention is made in view of the above-described circumstances and intends to provide an exterior component of a vehicle that can contribute to commonization and size reduction of a lighting device.

### [MEANS FOR SOLVING THE PROBLEMS]

According to a first aspect of the present invention, there is provided a saddle-ride type vehicle according to claim 1.

According to a second aspect, in addition to the configuration of the first aspect, the first resin body has the same color as the lens.

According to a third aspect, in addition to the configuration of the first or second aspect, the lighting device is a taillight and is disposed at a center in a vehicle width direction, and the panels as a left and right pair are disposed outside the lighting device in the vehicle width direction, and a vehicle body frame or a storage box is disposed between the pair of the panels as seen in plan view.

According to the invention, a recess is made in the exterior component and the panel is adhered into the recess by an adhesive material.

According to the invention, the panel is attached to a downwardly-faced surface of the exterior component.

According to a sixth aspect, in addition to the configuration of any of the first to fifth aspects, the recesses and projections include ridge lines of hexagons protruding from the inner surface of the first resin body and hollows formed of inclined surfaces that are inclined toward a center of the hexagon inside the ridge lines.

According to a seventh aspect, in addition to the configuration of any of the first to sixth aspects, an outer periphery of the first resin body bends toward an inside of a vehicle body.

### [EFFECTS OF THE INVENTION]

According to the first aspect, the first resin body with translucency is connected to the outer periphery of the lens with translucency. Thus, the first resin body forming the outer surface of the exterior component and the lighting device can be visually recognized with integrated appearance. As a result, the range recognized as the lighting device is enlarged irrespective of the size of the lighting device itself. In addition, the range recognized as the lighting device can be adjusted based on the size of the panel. Thus, the lighting device can be commonized even when the shape of the exterior component of the vehicle changes. Moreover, the second resin body with the metallic color makes the recess-and-projection pattern of the first resin body conspicuous and gives depth to the first resin body. Thus, a feeling of unity of the lens of the lighting device and the panel can be further emphasized.

According to the second aspect, in general, the lens of the lighting device is configured to have red translucency when being used for a taillight, or to have colorless translucency when being used for a headlight, or to have orange translucency when being used for blinkers, and the color of the first resin body can be made to match the color of the lens according to each use purpose. This allows the panel and the lens to have integrated appearance.

According to the third aspect, the space at the vehicle rear part can be effectively utilized according to size reduction of the lighting device.

According to the invention, the panel is housed in the recess of the exterior component to be positioned. Thus, the panel can be easily fixed to a predetermined position. The recess favorably keeps the adhesion of the panel by suppressing protrusion of the first resin body on the outer surface of the exterior component.

According to the invention, the panel is disposed at a position in shade on the exterior component and thus a feeling of depth of the panel can be favorably shown up.

According to the sixth aspect, light that passes through the first resin body is reflected and diffused by the second resin body and the ridge lines and the inclined surfaces of the first resin body can be made conspicuous.

According to the seventh aspect, the first resin body covers the end part of the second resin body at the end part of the panel. Thus, the metallic color is protected and favorable design can be ensured.

### [BRIEF DESCRIPTION OF THE DRAWINGS]

FIG. 1 is a side view schematically depicting the configuration of a saddle-ride type vehicle, i.e. a two-wheeled motor vehicle, according to one embodiment of the present invention.
FIG. 2 is a side view schematically depicting the structure of a vehicle body frame.
FIG. 3 is an enlarged rear view of a rear cowl as viewed from the vehicle body rear side.
FIG. 4 is an enlarged sectional view of a taillight unit along line 4-4 in FIG. 3.
FIG. 5 is an enlarged plan view of a panel.
FIG. 6 is an enlarged plan view depicting the vehicle body rear part.
FIG. 7 is a sectional view along line 7-7 in FIG. 6.
FIG. 8 is a sectional view along line 8-8 in FIG. 6.
FIG. 9 is an enlarged front view of a front cowl as viewed from the vehicle body front side.
FIG. 10 is an enlarged front view of the front cowl as viewed from the vehicle body front side.

### [MODE FOR CARRYING OUT THE INVENTION]

One embodiment of the present invention will be described below with reference to the accompanying drawings. In the following description, front, rear, left, right, upward, and downward directions refer to directions as viewed from a rider who rides a two-wheeled motor vehicle.

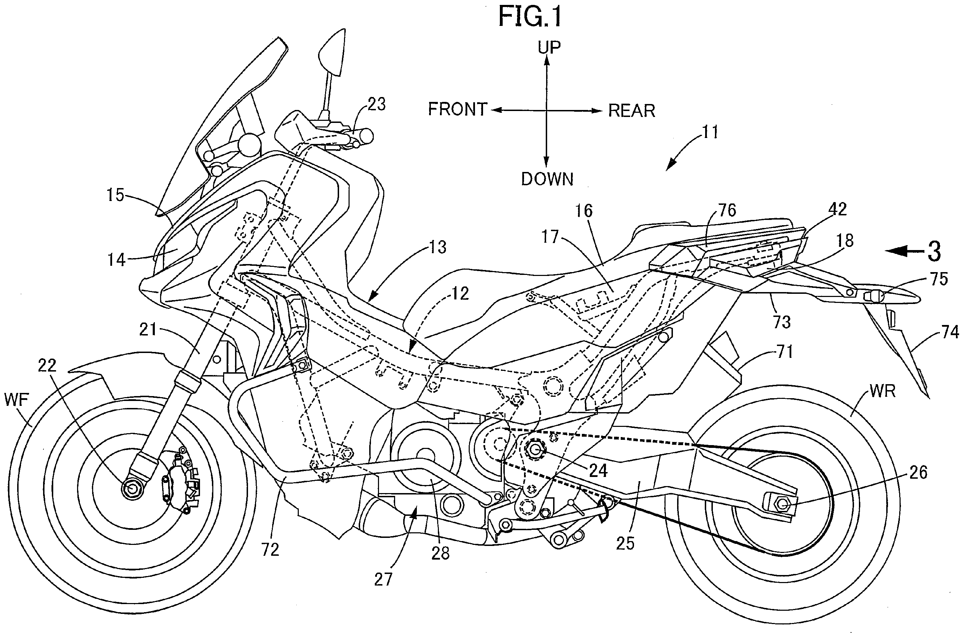

FIG. 1 depicts the overall picture of one concrete example of a saddle-ride type vehicle, i.e. a two-wheeled motor vehicle 11, according to the one embodiment of the present invention. The two-wheeled motor vehicle 11 includes a vehicle body frame 12. The vehicle body frame 12 is partly covered by an exterior component 13. The exterior component 13 includes a front cowl 15 that covers the front side from a fuel tank and supports headlights 14, a side cowl 17 that covers the lateral side of a rider seat 16, and a rear cowl 18 that covers the rear end of the rider seat 16 on the rear side of the side cowl 17. The front cowl 15, the side cowl 17, and the rear cowl 18 are molded from a resin material, for example.

A front fork 21 is steerably supported by the vehicle body frame 12 on the front side of the vehicle. A front wheel WF is supported by the front fork 21 rotatably around an axle 22. A steering handlebar 23 is joined to the upper end of the front fork 21.

On the rear side of the vehicle, a swing arm 25 is joined to the vehicle body frame 12 swingably in an up-down direction around a pivot 24. A rear wheel WR is supported at the rear end of the swing arm 25 rotatably around an axle 26. An internal combustion engine unit 27 is mounted on the vehicle body frame 12 between the front wheel WF and the rear wheel WR. The internal combustion engine unit 27 includes an internal combustion engine 28 that generates a driving force transmitted to the rear wheel WR. An exhaust pipe extended from the internal combustion engine 28 is connected to a muffler 71. The muffler 71 is supported by the vehicle body frame 12 on the lateral side of the swing arm 25. A guard member 72 supported by the vehicle body frame 12 is disposed on the lateral side of the internal combustion engine unit 27. The guard member 72 is molded from a metal material having a pipe shape.

A rear fender 73 continuous from the rear cowl 18 is disposed above the rear wheel WR. To the rear fender 73, a license stay 74 that extends downward from the rear fender 73 and supports a so-called license plate and a pair of rear blinkers 75 that extend leftward and rightward in the vehicle width direction from the rear fender 73 are attached. A grab rail 76 is formed integrally with the rear cowl 18 on the lateral side of the rider seat 16. In tandem riding, the pillion passenger on the rear side can hold the grab rail 76 to stabilize the riding posture.

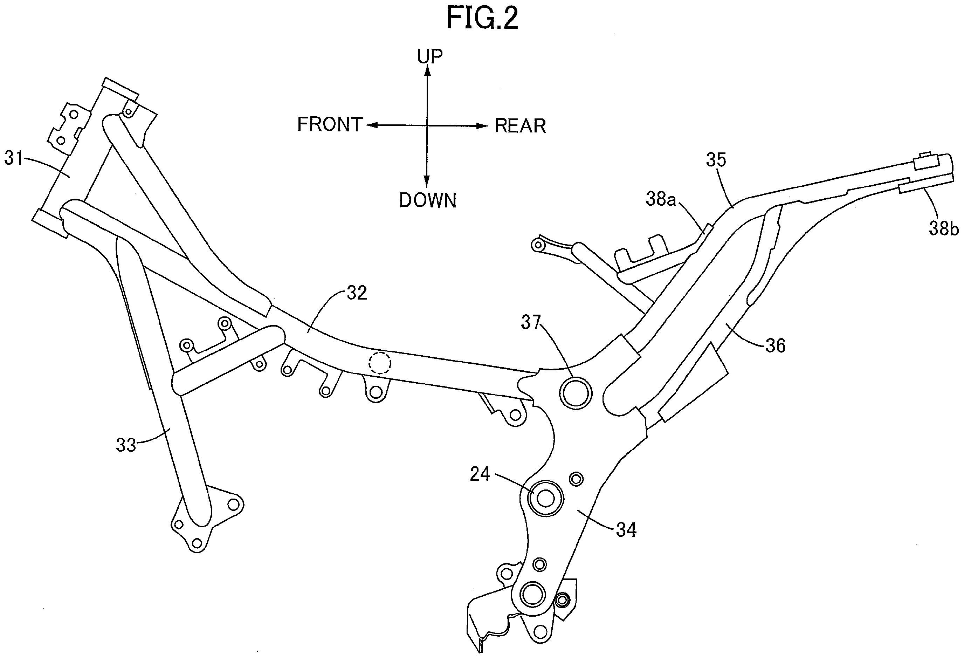

As depicted in FIG. 2, the vehicle body frame 12 has the following components: a head pipe 31; a pair of left and right main frames 32 that extend from the head pipe 31 toward the lower rear side; a pair of left and right down-tubes 33 that extend from the head pipe 31 toward the lower rear side below the main frames 32; a pair of left and right pivot frames 34 that are joined to the rear ends of the individual main frames 32 and extend downward; a pair of left and right seat rails 35 that extend from the upper ends of the individual pivot frames 34 toward the upper rear side; and a pair of left and right rear frames 36 that extend rearward from the individual pivot frames 34 on the lower side relative to the seat rails 35 and are joined to the seat rails 35 at the rear ends. The above-described front fork 21 is rotatably supported by the head pipe 31. The front cowl 15 covers the head pipe 31 from the front side.

The lower ends of the main frames 32 are joined to the rear side of the internal combustion engine 28 and the lower ends of the down-tubes 33 are joined to the front side of the internal combustion engine 28. In this manner, a rigid body structure is established by the internal combustion engine 28 in addition to the main frames 32 and the down-tubes 33. The left and right pivot frames 34 are mutually joined by a cross tube 37 that extends in the horizontal direction. The pivot 24 is supported by the pivot frames 34. The seat rails 35 are mutually joined by front and rear brackets 38a and 38b. The rear cowl 18 covers the bracket 38b on the rear side. The seat rails 35 are supported by the rear frames 36 from the lower side.

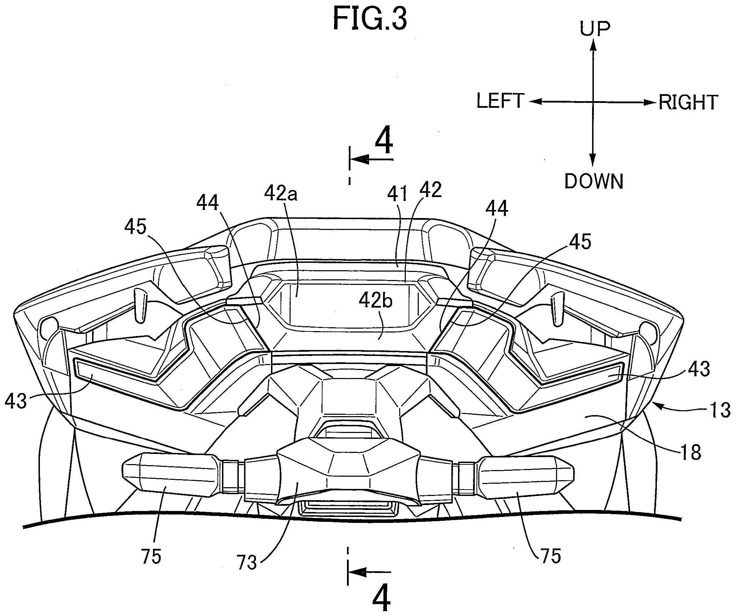

As depicted in FIG. 3, a taillight unit (lighting device) 41 is incorporated into the rear cowl 18 of the exterior component 13. The taillight unit 41 includes a translucent lens 42. The lens 42 is colored red. The lens 42 is segmented into a brake lamp region 42a located at the rear end of the vehicle and a tail lamp region 42b located on the vehicle front side relative to the brake lamp region 42a with the intermediary of a step. The tail lamp region 42b extends along the lower edge of the brake lamp region 42a. When the brake is operated, the taillight unit 41 makes illumination from the brake lamp region 42a. The brake lamp region 42a functions as a brake lamp. When the headlights 14 are lit, the taillight unit 41 makes illumination from the tail lamp region 42b. The rear cowl 18 is disposed along at least part of the lens 42.

On the outer surface of the rear cowl 18, a pair of left and right panels 43 are disposed along an outer periphery of the lens 42 (tail lamp region 42b). The panels 43 are adhered and fixed to the outer surface of the rear cowl 18. End surfaces of the panels 43 are disposed along the outer periphery of the tail lamp region 42b. The end surface of the panel 43 is defined by a ridge line 44 of one line segment. The ridge line 44 of the end surface corresponds with a one-line-segment region 45 of the contour of the taillight unit 41 (tail lamp region 42b). Due to this matching between the line segment of the ridge line 44 and the one-line-segment region 45 of the taillight unit 41, a feeling of unity of the taillight unit 41 and the panels 43 is emphasized and the design is enhanced. The panels 43 extend leftward and rightward from the taillight unit 41 in the vehicle width direction of the vehicle body.

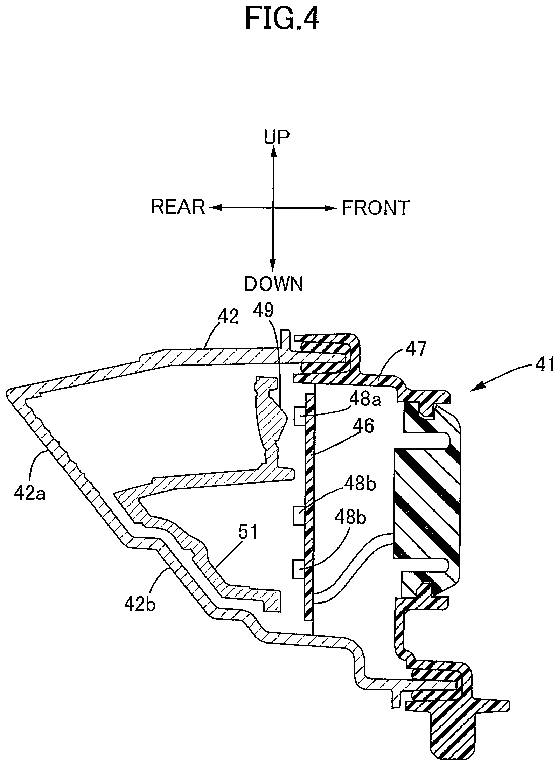

As depicted in FIG. 4, the taillight unit 41 includes a housing 47 that supports a substrate 46. The lens 42 is joined to the housing 47. The lens 42 covers the substrate 46. A light source 48a for the brake lamp and a light source 48b for the tail lamp are mounted on the substrate 46. The light sources 48a and 48b are formed of light sources of surface light emission, such as light-emitting diodes (LEDs), for example. An inner lens 49 is made to face the light source 48a for the brake lamp. The inner lens 49 guides emitted light of the light source 48a toward the brake lamp region 42a of the lens 42. A light guide 51 is made to face the light source 48b for the tail lamp. The light guide 51 guides light of the light source 48b toward the tail lamp region 42b of the lens 42. The light guide 51 causes the tail lamp region 42b of the lens 42 to shine with dimmer light than the inner lens 49.

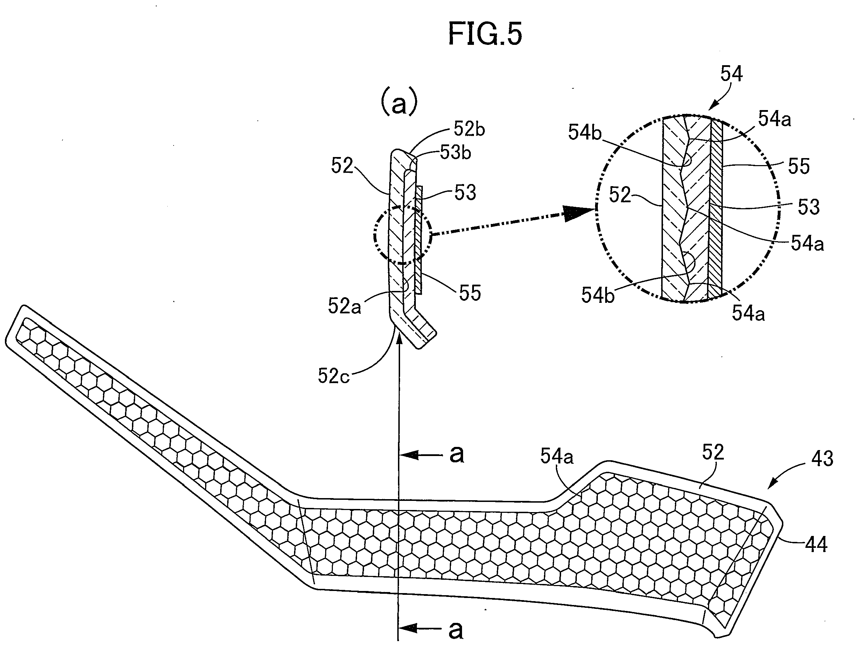

As depicted in FIG. 5, the individual panel 43 includes a first resin body 52 having translucency and a second resin body 53 that is colored in a metallic color and is opaque. Here, the first resin body 52 is colored in the same color as the lens 42 of the taillight unit 41. The second resin body 53 is stacked on an inner surface (back side of the outer surface) 52a of the first resin body 52. Recesses and projections 54 are marked out in the inner surface of the first resin body 52. The recesses and projections 54 are formed of ridge lines 54a that represent hexagons and hollows 54b formed of inclined surfaces that are inclined toward the center inside the ridge lines 54a. Outer peripheries 52b and 52c of the first resin body 52 bend toward the vehicle body inside and overlap with an end surface 53b of the second resin body 53 partly (at the outer periphery 52b). A double-sided adhesive tape 55 is adhered to the inner surface of the second resin body 53 by one adhesive surface. The first resin body 52 forms the outer surface of the exterior component 13. The stacking of the first resin body 52 and the second resin body 53 may be carried out through two-color insert molding or through welding.

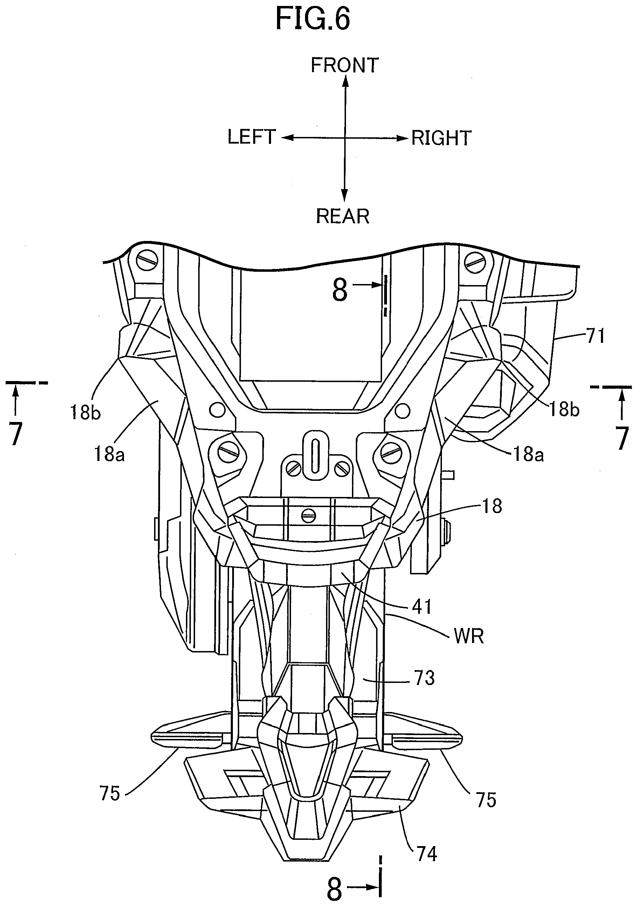

As depicted in FIG. 6, an outer wall 18a of the rear cowl 18 gradually extends leftward and rightward in the vehicle width direction as going toward the vehicle body front side from both the left and right sides of the taillight unit 41. Therefore, the outer wall 18a of the rear cowl 18 is surely visually recognized from the vehicle body rear side. Outer ends 18b of the outer wall 18a define the left and right ends of the vehicle body in the vehicle width direction.

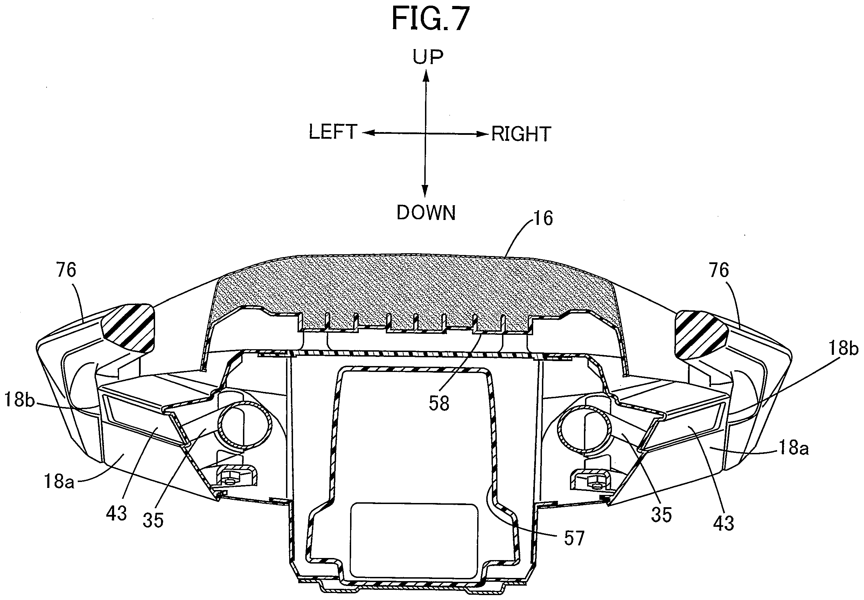

As depicted in FIG. 7, the panels 43 extend to the outer ends 18b of the outer wall 18a of the rear cowl 18. The outer wall 18a of the rear cowl 18 covers the seat rails 35 from the outside in the vehicle width direction. A storage box 57 is disposed between the seat rails 35. An upper opening of the storage box 57 is openably closed by a lid body 58 integrated with the rider seat 16. In this manner, the vehicle body frame 12 and the storage box 57 are disposed between the pair of panels 43 as seen in plan view from the vehicle upper side.

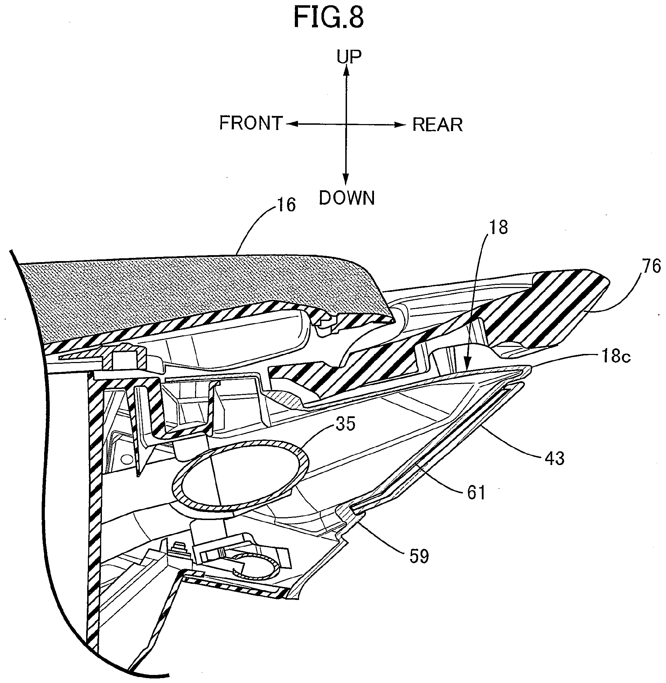

As depicted in FIG. 8, the rear cowl 18 has a downwardly-faced surface 59 that gets closer to the ground as the position becomes closer to the vehicle body front side from a rear end 18c. Because the downwardly-faced surface 59 is inclined in this manner, the downwardly-faced surface 59 is surely visually recognized from the vehicle body rear side. The panels 43 are attached to the downwardly-faced surface 59.

The rear cowl 18 has recesses 61 in line with the contours of the first resin bodies 52 of the panels 43. The panels 43 are housed in the recesses 61. The panels 43 are adhered to the inner surfaces of the recesses 61 by the double-sided adhesive tapes (adhesive materials) 55.

Next, the operation of the present embodiment will be described. When a driver operates a brake lever mounted on the steering handlebar 23, the light source 48a for the brake lamp in the taillight unit 41 emits light. The inner lens 49 guides the emitted light of the light source 48a toward the brake lamp region 42a of the lens 42. The taillight unit 41 is lit in the brake lamp region 42a. The braking is notified to vehicles on the rear side.

When the headlights 14 are lit, the light source 48b for the tail lamp in the taillight unit 41 emits light. The light guide 51 guides the emitted light of the light source 48b toward the tail lamp region 42b of the lens 42. The light guide 51 causes the tail lamp region 42b of the lens 42 to shine with dimmer light than the inner lens 49. The existence of the two-wheeled motor vehicle 11 is notified to vehicles on the rear side.

The first resin bodies 52 with translucency are connected to an outer periphery of the lens 42 with translucency. Thus, the first resin bodies 52 forming the outer surface of the rear cowl 18 and the taillight unit 41 can be visually recognized with integrated appearance. As a result, the range recognized as the taillight unit 41 is enlarged irrespective of the size of the taillight unit 41 itself. The size of the taillight unit 41 itself can be decreased compared with the size required as the range of lighting. Size reduction of the taillight unit 41 is realized. In addition, the enlargement of the range recognized as the taillight unit 41 is adjusted based on the size of the first resin bodies 52. Thus, the taillight unit 41 can be commonized with respect to various sizes. Moreover, the second resin bodies 53 with the metallic color make the recess-and-projection pattern of the first resin bodies 52 conspicuous and give depth to the first resin bodies 52 to further emphasize the feeling of unity with the lens 42.

The first resin bodies 52 of the panels 43 have the same color as the lens 42 of the taillight unit 41. In general, for example, the lens 42 of the taillight unit 41 is configured to have red translucency when being used for a taillight, or to have colorless translucency when being used for a headlight, or to have orange translucency when being used for blinkers, and the color of the first resin bodies 52 is established according to each use purpose. The first resin bodies 52 and the lens 42 can surely have integrated appearance.

In the two-wheeled motor vehicle 11, the pair of left and right panels 43 are disposed in the vehicle width direction with respect to the taillight unit 41 at the center in the vehicle width direction, and the seat rails 35 and the storage box 57 are disposed between the pair of panels 43 as seen in plan view from the vehicle upper side. According to the size reduction of the taillight unit 41, the space at the vehicle body rear part can be effectively utilized. Diversity of the design is realized.

The panels 43 are accepted by the recesses 61 marked out in the rear cowl 18 in line with the contours of the first resin bodies 52 and are adhered to the inner surfaces of the recesses 61 by the double-sided adhesive tapes 55. The panels 43 can be easily fixed to specified positions by being guided by the recesses 61 and being positioned on the rear cowl 18. The recesses 61 favorably keep the adhesion of the panels 43 by suppressing protrusion of the first resin bodies 52 on the outer surface of the rear cowl 18.

The panels 43 are attached to the downwardly-faced surface 59 of the rear cowl 18. Because the panels 43 are disposed at positions in shade on the rear cowl 18, a feeling of depth of the panels 43 can be favorably shown up.

The recesses and projections 54 include the ridge lines 54a of hexagons protruding from the inner surface of the first resin body 52 and the hollows 54b formed of inclined surfaces that descend toward the center inside the ridge lines 54a. Light that passes through the first resin bodies 52 is irregularly reflected and diffused by the ridge lines 54a and the inclined surfaces and the first resin bodies 52 can favorably cause the light to spread over the whole of the first resin bodies 52.

In the panels 43, the outer peripheries of the first resin bodies 52 bend toward the vehicle body inside. At the end surface of the panel 43, the boundary line between the first resin body 52 and the second resin body 53 is hidden by covering by the first resin body 52. Favorable design can be ensured.

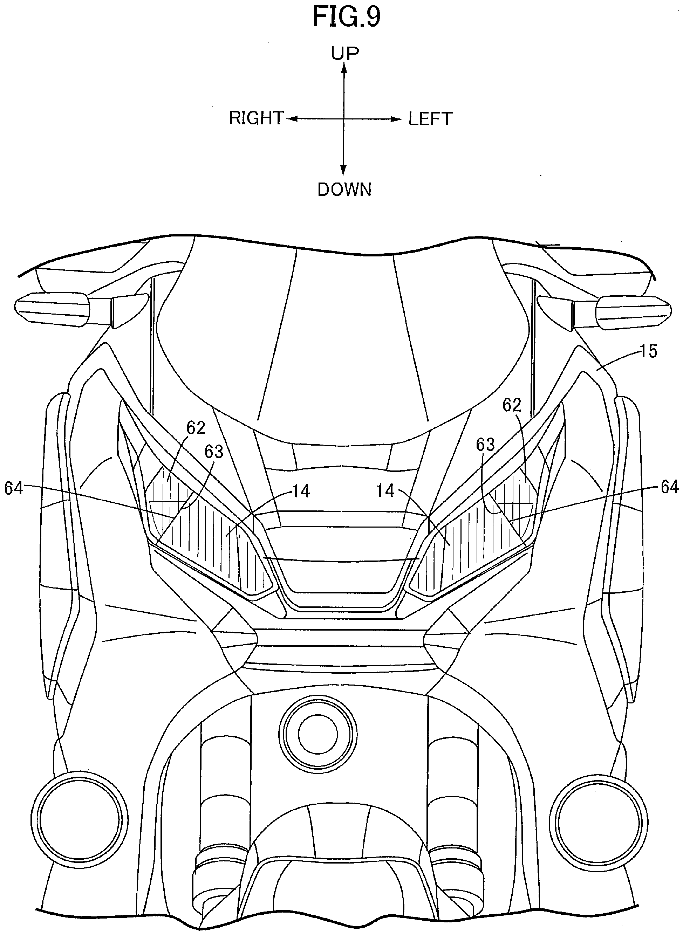

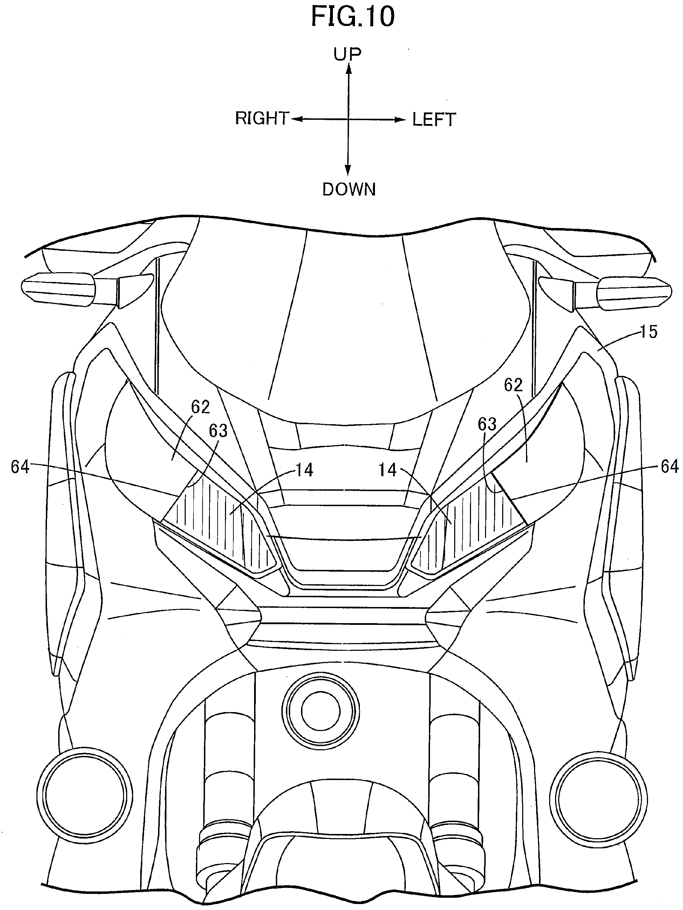

Besides, in the two-wheeled motor vehicle 11, as depicted in FIG. 9, a pair of left and right panels 62 may be disposed on the outer surface of the front cowl 15 along outer peripheries of lenses of the headlights 14. The panels 62 may be formed of the first resin body 52 and the second resin body 53 similarly with the above-described panels 43. The panels 62 are adhered and fixed to the outer surface of the front cowl 15. An end surface of the panel 62 and the outer surface are connected by a ridge line 63 of one line segment. The ridge line 63 of the end surface corresponds with a one-line-segment region 64 of the contour of the headlight 14. Due to this matching between the line segments of the ridge lines 63 and the one-line-segment regions 64 of the headlights 14, a feeling of unity of the headlights 14 and the panels 62 is emphasized and the design is enhanced. The panels 62 extend leftward and rightward from the headlights 14 in the vehicle width direction of the vehicle body. Here, the first resin bodies 52 of the panels 62 may be formed to be transparent similarly with the lenses of the headlights 14. As depicted in FIG. 10, changing the shape of the panels 62 can easily allow the design to have diversity.
[SUBJECT] To provide a saddle-ride type vehicle that can contribute to commonization and size reduction of a taillight unit (lighting device).
[MEANS FOR SOLUTION] A saddle-ride type vehicle includes a lighting device 41 having a light source and a translucent lens 42a, 42b that allows light of the light source to be transmitted through the lens 42a, 42b, an exterior component 18 disposed along at least part of the lens 42a, 42b, and panels 43 that are disposed on a surface of the exterior component 18 along an outer periphery of the lens 42a, 42b. The panels 43 form the outer surface of the exterior component 18 while being connected to an outer periphery of the lens 42b and have translucency. The panels 43 each include a first resin body in which recesses and projections are marked out in an inner surface of the first resin body and a second resin body that is stacked on the inner surface of the first resin body and is colored in a metallic color.

### [DESCRIPTION OF REFERENCE NUMERALS AND SYMBOLS]

11··· Saddle-ride type vehicle (two-wheeled motor vehicle), 15···Exterior component (front cowl), 18···Exterior component (rear cowl), 41···Lighting device (taillight unit), 42···Lens, 48a···Light source (for brake lamp), 48b···Light source (for tail lamp), 52···First resin body, 52a···Inner surface, 53···Second resin body, 53b···End surface, 54···Recess and projection, 54a···Ridge line, 54b···Hollow, 55···Adhesive material (double-sided adhesive tape), 57···Storage box, 61···Recess, 62···Panel.

## Claims

1. A saddle-ride type vehicle comprising
a lighting device (41) having a light source (48a, 48b) and a translucent lens (42) that allows light of the light source (48a, 48b) to be transmitted through the lens (42), and an exterior component (18) that covers an outer periphery of the lens (42), wherein a panel (43) disposed along the outer periphery of the lens (42) is provided on a surface of the exterior component (18), and
the panel (43) includes a first resin body (52) that forms an outer surface of the exterior component (18) and has translucency,
**characterized in that**
the first resin body (52) has recesses and projections (54) in an inner surface (52a) thereof, and
the panel (43) further includes
a second resin body (53) that is stacked on the inner surface (52a) of the first resin body (52) and is colored in a metallic color, and
a recess (61) is made in the exterior component (18) and the panel (43) is adhered into the recess (61) by an adhesive material (55), the panel (43) is attached to a downwardly-faced surface (59) of the exterior component (18).

2. The saddle-ride type vehicle according to claim 1, wherein
the first resin body (52) has the same color as the lens (42).

3. The saddle-ride type vehicle according to claim 1 or 2, wherein
the lighting device (41) is a taillight and is disposed at a center in a vehicle width direction, and the panels (43) as a left and right pair are disposed outside the lighting device (41) in the vehicle width direction, and a vehicle body frame (12) or a storage box (57) is disposed between the pair of the panels (43) as seen in plan view.

4. The saddle-ride type vehicle according to any one of claims 1 to 3, wherein
the recesses and projections (54) include ridge lines (54a) of hexagons protruding from the inner surface (52a) of the first resin body (52) and hollows (54b) formed of inclined surfaces that are inclined toward a center of the hexagon inside the ridge lines (54a).

5. The saddle-ride type vehicle according to any one of claims 1 to 4, wherein
an outer periphery of the first resin body (52) bends toward an inside of a vehicle body.

## Patentansprüche

1. Sattelfahrt-Fahrzeug, umfassend
eine Beleuchtungseinrichtung (41) mit einer Lichtquelle (48a, 48b) und einer transluzenten Linse (42), die es ermöglicht, dass Licht der Lichtquelle (48a, 48b) durch die Linse (42) übertragen wird, und
eine äußere Komponente (18), die einen Außenumfang der Linse (42) abdeckt, wobei eine Platte (43), die entlang des äußeren Umfangs der Linse (42) angeordnet ist, auf einer Oberfläche der äußeren Komponente (18) vorgesehen ist, und
die Platte (43) einen ersten Harz-/Kunstharzkörper (52) umfasst, der eine Außenfläche der äußeren Komponente (18) bildet und eine Transluzenz aufweist,
**dadurch gekennzeichnet, dass**
der erste Harz-/Kunstharzkörper (52) Aussparungen und Vorsprünge (54) in einer Innenfläche (52a) davon aufweist, und
die Platte (43) ferner umfasst
einen zweiten Harz-/Kunstharzkörper (53), der auf die Innenfläche (52a) des ersten Harz-/Kunstharzkörpers (52) gestapelt und in einer metallischen Farbe gefärbt ist, und
eine Aussparung (61) in der äußeren Komponente (18) ausgebildet ist und die Platte (43) durch ein Klebematerial (55) in die Aussparung (61) eingeklebt ist, wobei die Platte (43) an einer nach unten gerichteten Oberfläche (59) der äußeren Komponente (18) angebracht ist.

2. Sattelfahrt-Fahrzeug nach Anspruch 1, wobei
der erste Harz-/Kunstharzkörper (52) die gleiche Farbe wie die Linse (42) aufweist.

3. Sattelfahrt-Fahrzeug nach Anspruch 1 oder 2, wobei
die Beleuchtungseinrichtung (41) ein Rücklicht ist und in einer Fahrzeugbreitenrichtung in einer Mitte angeordnet ist, und die Platten (43) als ein linkes und rechtes Paar in der Fahrzeugbreitenrichtung außerhalb der Beleuchtungseinrichtung (41) angeordnet sind, und ein Fahrzeug körperrahmen (12) oder ein Aufbewahrungskasten (57) in einer Draufsicht zwischen dem Paar von Platten (43) angeordnet ist.

4. Sattelfahrt-Fahrzeug nach einem der Ansprüche 1 bis 3, wobei
die Aussparungen und Vorsprünge (54) Rückenlinien (54a) von Sechsecken umfassen, die von der Innenfläche (52a) des ersten Harz-/Kunstharzkörpers (52) hervorstehen, und Aushöhlungen (54b) umfassen, die von geneigten Oberflächen gebildet sind, die innerhalb der Rückenlinien (54a) zu einem Zentrum des Sechsecks hin geneigt sind.

5. Sattelfahrt-Fahrzeug nach einem der Ansprüche 1 bis 4, wobei
ein Außenumfang des ersten Harz-/Kunstharzkörpers (52) sich zu einer Innenseite eines Fahrzeugkörpers hin biegt.

## Revendications

1. Véhicule de type à selle comprenant
un dispositif d'éclairage (41) possédant une source de lumière (48a, 48b) et une lentille translucide (42) qui permet à la lumière de la source de lumière (48a, 48b) d'être transmise à travers la lentille (42), et un composant extérieur (18) qui recouvre une périphérie externe de la lentille (42),
dans lequel un panneau (43) disposé le long de la périphérie externe de la lentille (42) est fourni sur une surface du composant extérieur (18), et
le panneau (43) inclut un premier corps en résine (52) qui forme une surface externe du composant extérieur (18) et présente une translucidité,
**caractérisé en ce que**
le premier corps en résine (52) possède des évidements et des saillies (54) dans une surface interne (52a) de celui-ci, et
le panneau (43) inclut en outre
un second corps en résine (53) qui est empilé sur la surface interne (52a) du premier corps en résine (52) et qui est coloré en une couleur métallique, et
un évidement (61) est réalisé dans le composant extérieur (18) et le panneau (43) est collé dans l'évidement (61) par un matériau adhésif (55), le panneau (43) est fixé à une surface orientée vers le bas (59) du composant extérieur (18).

2. Véhicule de type à selle selon la revendication 1, dans lequel le premier corps en résine (52) a la même couleur que la lentille (42).

3. Véhicule de type à selle selon la revendication 1 ou 2, dans lequel
le dispositif d'éclairage (41) est un feu arrière et est disposé à un centre dans une direction de largeur de véhicule, et les panneaux (43) en tant que paire gauche et droite sont disposés à l'extérieur du dispositif d'éclairage (41) dans la direction de largeur de véhicule, et un cadre de carrosserie de véhicule (12) ou une boîte de rangement (57) est disposé entre la paire de panneaux (43) en vue en plan.

4. Véhicule de type à selle selon l'une quelconque des revendications 1 à 3, dans lequel
les évidements et les saillies (54) incluent des lignes de crête (54a) d'hexagones faisant saillie à partir de la surface interne (52a) du premier corps en résine (52) et des creux (54b) formés de surfaces inclinées qui sont inclinées en direction d'un centre de l'hexagone à l'intérieur des lignes de crête (54a).

5. Véhicule de type à selle selon l'une quelconque des revendications 1 à 4, dans lequel
une périphérie externe du premier corps en résine (52) s'incurve en direction d'un intérieur d'une carrosserie de véhicule.
